# EUROPEAN PATENT APPLICATION

(11) **EP 4 576 235 A1**
(43) Date of publication of application: **25.06.2025**
(21) Application number: 24218842.3
(22) Date of filing: 10.12.2024
(51) Int. Cl.: H01M 4/04, H01M 4/139

(54) **METHOD OF MANUFACTURING A CATHODE FOR A BATTERY CELL**

(30) Priority: 22.12.2023 IN 202341088007
(71) Applicant: Volkswagen AG, 38436 Wolfsburg (DE)
(72) Inventor: JAMADAR, Kartik, 38346 Wolfsburg (DE); GANGURDE, Priyanka, 422006 Nashik (IN)
(74) Representative: Bierschneider, Walter

(57) **Abstract**

The invention relates to a method for manufacturing a cathode (K) for a battery cell, in which a substrate film (1) is coated on one or both sides with an active material layer (3) which is formed from a mixture of active material particles (5) and binder (7), in particular PVDF, wherein the coating of the substrate film (1) is carried out by cold gas spraying with a Laval nozzle (9), in which the active material particles (5) are applied in powder form to the substrate film (1) at high speed in a main flow direction with the aid of a process gas stream (P). According to the invention, the active material particles (5) in powder form are injected via a feed tube (23) in a convergent section (11) of the Laval nozzle (9) into the process gas stream (P) guided through the Laval nozzle (9). For uniform mixing of the active material particles (5) with the binder (7), a divergent section (15) of the Laval nozzle (9) forms a mixing chamber in which the binder (7) is injected in liquid state into the process gas stream (P).

## Description

The invention relates to a method for manufacturing a cathode for a battery cell according to the general term of claim 1.

In such a process, a substrate film is coated on one or both sides with a layer of active material. This can be done in a conventional process by wet coating, in which a slurry is applied to the substrate film. The slurry contains active material particles and a solvent, among other things. Following the wet coating, the electrode formed in this way is subjected to a drying process, a calendering process and a cutting process. The following problems arise during electrode production:
Firstly, the costs and energy required to remove the toxic solvent NMP from the cathode by drying are excessively high. Secondly, it is difficult to control the coating edge (start and end edge) and the coating width with a tolerance of 0.5 mm. Thirdly, a recycling plant is required for NMP. This causes additional costs, a higher space requirement and increases the complexity of the process. The explosion limit of NMP is very low, which increases the safety risk.

Alternatively, electrodes can be produced by dry coating. This type of (solvent-free) dry coating has the following disadvantages: After dry coating, heat calendering (approx. 150°C) is required to melt and evenly distribute the binder. This increases the costs. The adhesion of the electrode to the substrate is lower after dry coating and calendering, resulting in the problem of delamination. The pH value of the coating cannot be kept uniform in all areas. This results in an uneven proportion of carbon black and binder in the coating. PTFE is used as a binder, which must be well fibrillated by high shear energy. This makes processing more difficult, as high shear stresses can cause cracks in the active material. The PTFE binder used for dry coating has a lower mechanical strength than conventional PVDF.

DE 10 2021 107 621 A1 discloses a generic process for coating a carrier material with an active material to produce an electrode foil for a battery cell. A Laval nozzle is used in the process. This has a convergent section that merges into a divergent section at a nozzle neck with the narrowest cross-section. DE 10 2016 217 372 A1 discloses a method for manufacturing a fibrillated material composition. DE 10 2021 210 474 A1 discloses an electrode for a lithium-ion battery cell.

The object of the invention is to provide a method for manufacturing a cathode for a lithium-ion battery cell that is easier to manufacture in terms of process technology and reliable in operation compared to the state of the art.

The object is solved by the features of claim 1. Preferred embodiments of the invention are disclosed in the subclaims.

The invention relates to a method for manufacturing a cathode for a battery cell, in which a substrate film is coated on one or both sides with a layer of active material. The active material layer is formed from a mixture of active material particles and a binder, in particular PVDF. The substrate film is coated by cold gas spraying using a Laval nozzle. During cold gas spraying, the active material particles in powder form are applied to the substrate film at high speed with the aid of a process gas stream. According to the characterising part of claim 1, the active material particles in powder form are injected via a feed pipe in a convergent section of the Laval nozzle into the process gas flow guided through the Laval nozzle. In order to achieve uniform mixing of the active material particles with the binder, a divergent section of the Laval nozzle forms a mixing chamber. The binder is injected into the process gas flow in this mixing chamber. The active material/binder particle mixture formed in this way is then applied to the substrate film by means of the process gas flow.

In order to solve the problems known from the prior art, a solvent-free active material layer or electrode coating is produced according to the De Laval principle in accordance with the invention. In the solvent-free coating process according to the invention, dry active material particles are used. This is an ideal alternative solution to replace a wet coating based manufacturing process as it eliminates both the cost of solvents and the cost of their removal and recovery.

Cold gas spraying can achieve a supersonic speed of the process gas flow at the nozzle outlet. This means that the particles are accelerated towards the substrate at a very high speed (around 1 to 1.5 times the Mach speed).

Due to the high kinetic energy, the dry mix adheres very strongly to the substrate. The dry mix is also very densely packed, resulting in a high-density coating. No calendering is required to compact the particles. If necessary, only soft calendering is required to achieve a uniform thickness (i.e. so-called skin calendering).

An essential core of the invention deals with the question of how the binder can be evenly mixed with the active material particles in the Laval nozzle. Various methods are proposed below for this purpose:
According to a first embodiment, a molten binder, in particular PVDF (with or without carbon black particles), is atomised in the divergent section of the Laval nozzle. The binder (PVDF) is converted to the molten state by heating it to around 200°C. The molten binder is fed together with pressurised process gas (preferably compressed air) into the outlet zone of the Laval nozzle (i.e. into its divergent section). There, the molten binder comes into contact with the active material particles and with the cooled process gas flow. The molten binder is cooled and solidifies into droplets (atomisation process). The binder also mixes with the active material particles due to the turbulence generated in the outlet zone. As the process continues, the active material/binder particle mixture is sprayed onto the substrate at high speed.

According to a second embodiment, the binder is part of a dispersion that is atomised in the mixing chamber of the Laval nozzle. The dispersion comprises binder particles and, if necessary, carbon black particles, which are dispersed in a solvent such as propylene carbonate or acetonitrile. The dispersion can be heated to 100°C, for example, if necessary. The dispersion is prepared by wet mixing. The solvent used here is not NMP, but PC or acetonitrile or both. Since PC and acetonitrile are also part of the electrolyte solvent, the applied active material layer does not have to dry to remove the solvent. The dispersion is mixed with the active material particles, creating turbulence in the divergent section of the Laval nozzle with the help of compressed air.

The cold gas spraying process is described below: According to this process, the pressurised process gas is heated to a preset temperature with the help of a compressor, often using a coil of a resistance-heated electrical tube. The process gas is not heated to heat or soften the active material particles, but to achieve higher flow velocities, which ultimately lead to higher particle impact velocities. The high pressure gas is introduced into the inlet of a nozzle (convergent section) where the gas is accelerated to a high velocity (Mach numbers from 1 to 4) while expanding in the divergent section of the nozzle. A pressure control valve controls the air pressure at the inlet of the Laval nozzle. The compressor can be a centrifugal compressor or a turbo compressor with a radial design. In this case, process gas (e.g. air or nitrogen) is sucked into the centre of a rotating impeller with radial blades and compressed by centrifugal force. The compressed, heated air - as well as the active material particles - is injected into the convergent section of the Laval nozzle. The compressed and heated air (with the active material particles) still moves at subsonic speed in the convergent section. At the nozzle throat, the process gas is accelerated to supersonic speed. From the nozzle neck, the cross-sectional section increases so that the gas expands and the axial velocity increases to supersonic velocity.

Binder inlets and process gas inlets for injecting compressed air (at room temperature) are located in the divergent section of the Laval nozzle. The liquid binder and the compressed air are injected into the divergent section of the Laval nozzle at different pressures and speeds. This creates a swirling movement in the mixing chamber. This turbulent swirling motion causes the active material particles to collide with the PVDF and carbon black particles. As the active material in the divergent section is at approximately room temperature, the PVDF solidifies and atomises into smaller particles with a size of less than 200 nm. Turbulence and phase changes create a uniform PVDF coating (with carbon black) on the surface of the active material. This mixture of active material, binder and carbon black leaves the Laval nozzle at the speed of sound (approx. Mach 1) and is sprayed onto the aluminium foil, which serves as a substrate for the cathode electrode. In short, a high velocity is generated in the divergent nozzle section for the active material, which is then coated with liquid binder (possibly with carbon black) and finally sprayed onto the aluminium substrate. The aluminium foil is cut to the final electrode shape. It is placed on a base plate and held there by suction pressure. Both the substrate and the base plate move at the same speed during the coating process. It is important that there are no gaps between the substrate and the base plate, otherwise the high spraying energy can cause cracks in the substrate.

As soon as the coating on the substrate is complete, it is moved into the heating and levelling zone. In this zone, the substrate detaches from the base plate and moves into the levelling zone on its own. The base plate moves back to its original position through a reversing movement. The levelling zone is a soft calendering zone that gives the coating a good surface quality. This means that the aluminium foil is held by the base plate, the powder coming from the Laval nozzle is applied and then, if necessary, the electrode is transferred to a soft calendering zone. During the coating process, the substrate is held firmly to the base plate by vacuum. Once the coating process is complete, the electrode is released. The coating process first takes place on one side of the substrate and then on the opposite side. Soft calendering takes place after the coating process has been completed on both sides.

In order to deposit the active material particles on the substrate, the particles must move at a critical speed. The critical speed depends on the active material particles. If the speed of the particles is less than the critical speed, they bounce off. If the speed of the particles is greater than the critical speed, they penetrate the substrate and damage it. The particles whose velocity is equal to the critical velocity are applied to the substrate.

A significant advantage of the invention is that the active material applied to the substrate compacts during the coating process. Therefore, no calendering is necessary. Therefore, a high critical speed is required for the particles.

The Laval nozzle consists of an upstream convergent section and a downstream divergent section. The Laval nozzle is characterised by the contour and length of the divergent section and also by the ratio of the outlet cross-section to the smallest cross-section (expansion ratio). The smallest cross-section of the Laval nozzle is at the nozzle neck. The Laval nozzle usually used is conically shaped in the divergent section. There is another method for spraying particles onto a workpiece in which either the entire divergent section or at least part of the divergent section has a bell-shaped contour. The bell-shaped contour shows significantly better application behaviour.

It is advantageous if the entire divergent section is bell-shaped. However, it is also sufficient if only part of the divergent section is bell-shaped and the rest has a different geometry, for example a conical or cylindrical shape; in this case, better flow behaviour is achieved. The beginning of the divergent section should preferably be bell-shaped. The bell shape should extend over at least a third or half of the length of the divergent section. The divergent section of the nozzle can then change into a different shape. An abrupt transition from the bell shape to a cone or cylinder should be avoided. Abrupt transitions disrupt the uniformity (lamellar flow) of the process gas flow.

The bell shape creates a lamellar flow of the gas medium. This gives the particles the highest velocity as the friction is reduced to a minimum. It is advantageous to have a Mach velocity of 1 to 1.5 at the outlet, depending on the particle size. Smaller particles require a higher Mach speed for a high density coating.

According to the invention, the Laval nozzle can have different shapes in the divergent section, namely a conical shape; a conical shape that changes into a cylindrical shape at the outlet; a bell shape; or a bell shape that slowly changes into a square shape at the outlet. A small divergence angle causes most of the impulse to flow in an axial direction and thus generates a high thrust force. A large divergence angle results in a short and lightweight design, but the power is lower due to the uneven flow. When using a conical Laval nozzle, the coating will be circular. This means that there are some areas (on the radius) where there is no deposition and some areas (in the centre) where the coating has overlapped.

To compensate for the uneven flow due to the conical shape, a combination of cone and cylinder shape is used. This shape has the advantage that the difference in velocity between the particles in the centre and at the edge is smaller. By operating with this bell shape, the jet leaves the nozzle essentially parallel. This results in a lamellar and uniform flow. Disadvantageous effects such as jet separation and uneven flow are significantly reduced. It enables a stronger coating as the angle of the divergent section is greater than with the conical shape. It is advantageous to use a bell-shaped Laval nozzle.

It is particularly preferable if the divergent section of the Laval nozzle initially has a bell shape starting from the nozzle neck, which changes into a rectangular shape at the nozzle outlet. In this case, a more uniform coating thickness can be achieved. With other shapes, as already explained, the coating thickness is greater in the centre than at the edge. This has the advantage that we can obtain a coating on the substrate that is divided into segments, which will be explained later.

In a first embodiment, atomisation of molten PVDF (with or without carbon black particles) occurs in the divergent section of the Laval nozzle. The term "atomisation" refers to a process in which a molten material is converted into small droplets, generally for the purpose of manufacturing a powder. In this case, PVDF is in the molten phase. The active material is fed into the convergent section of the Laval nozzle using compressed air. PVDF powder and carbon black are mixed together at 200°C in a dry mixing process. PVDF is converted into a molten state. The melting point of PVDF is 180°C, so we will heat up to a maximum of 250°C. This molten mixture with PVDF and carbon black is injected into the divergent section of the Laval nozzle. The Laval nozzle has an ambient temperature in its divergent section. The expansion of the process gas flowing into the divergent section converts thermal energy into kinetic energy, so that very high particle velocities can be achieved. The binder (molten PVDF with carbon black) is fed into the divergent section of the Laval nozzle via three or four inlet openings, while at the same time cool compressed air is fed in from below, also via three to four separate inlet openings, to create turbulence in the chamber. The direction of PVDF injection is towards the substrate. The direction of the compressed air injection is opposite to the substrate. This means that the compressed air acts from below in the opposite direction to the process gas flow. This leads to turbulence and mixing of the binder. The molten binder comes into contact with the process gas flow and the active material at room temperature. As a result, the molten material solidifies and is converted into small solid particles (atomisation technology). Due to the swirling movement caused by the compressed air at the nozzle neck, PVDF particles hit the active material and are deposited on the surface of the active cathode material. This mixture of active material and binder is directed onto the aluminium substrate at a high critical speed (around Mach 1). The impact of the particles at high speed leads to good adhesion with the substrate and also to increased cohesion between the particles compared to the wet coating method. This means that calendering is no longer necessary in the further course of the process. As the spray technology can produce a high surface roughness, only levelling (skin calendering) is required to achieve a good surface quality at the end.

Preferably, the contour of the divergent section of the Laval nozzle has a combination of bell and square shape, resulting in higher friction at the surface of the nozzle and lower friction in the centre of the nozzle. This different velocity at the surface of the nozzle and in the centre of the nozzle creates three different layers or segments on the substrate: The first layer deposited on the substrate is a low velocity layer (consisting mainly of PVDF with carbon black). This layer is less than 1 µm thick. It acts as a primer layer. This increases the adhesion to the substrate. The carbon black particles in this coating help to increase conductivity. The middle coating or the middle segment is a dense coating. This is mainly due to the high spraying speed of the powder (active material, coated with PVDF and carbon black). This is responsible for the capacity of the cell. As this is already a very dense coating, a calendering process is not necessary. This coating is a maximum of around 100 µm thick. The third layer or segment again consists mainly of low velocity powder (PVDF and carbon black). The low velocity is due to the high friction on the surface of the square nozzle. This reduces the speed. The third layer, which has a high binder content, ensures better adhesion of the cathode electrode to the separator. This avoids gaps between the separator and the electrode. This can reduce the lithium plating.

The advantage of this idea is that a cathode coating consisting of three layers or segments is obtained with a single spray shot. The nozzle geometry can be adapted so that the desired friction is created on the inner contact surface and the moving active material. This allows the speed of the active material to be reduced to the desired speed.

The compressed air, which creates turbulence in the mixing zone, also reduces the sonic velocity of the active material emerging from the nozzle neck. This has the advantage that the exit speed of the powder is reduced to the critical speed so that no cracks occur on the aluminium substrate due to the high speed of the powder spraying.

When injecting a binder dispersion into the divergent section of the Laval nozzle, it is preferable if PVDF and carbon black powder are present in finely ground powder form. The carbon black particles should be well dispersed and not agglomerated. Firstly, PVDF (powder or molten phase) comes into contact with carbon black. The mixed powder of PVDF and carbon black is then added to a solvent (such as propylene carbonate or acetonitrile or both). The ratio of PVDF to carbon black depends on the desired application and properties. Normally it is between 15 and 50% by weight. The dispersion can be heated up to 150°C for better dissolution. Propylene carbonate or acetonitrile or both are therefore used as a solvent as it is a component of the battery electrolyte, so no drying or removal of the solvent is required. The dispersion is then injected into the divergent section of the Laval nozzle. Here it comes into contact with the active material. PVDF is applied to the active material and is deposited on the substrate to form a semi-solid coating. The solvent is essentially the carrier of the PVDF for the active material. It does not dissolve the active material. The total solids content of the dispersion is more than 90%.

In this embodiment, a semi-solid mixture of active material and powder is injected onto the substrate at high speed. Injection of molten PVDF at 200°C is therefore not necessary. The entire injection can take place at room temperature.

To generate turbulence or vortex movements in the divergent section of the Laval nozzle, the divergent section has at least one process gas inlet, in particular three process gas inlets distributed evenly around the circumference, and at least one binder inlet, in particular three binder inlets distributed evenly around the circumference. The binder material, which is injected into the Laval nozzle at high speed through small injection openings at an angle of 120°, can generate a swirling movement in the process gas flow. In addition, the introduction of pulsations into the upstream flow can create velocity and pressure fluctuations that lead to turbulence. This can be achieved by changing the inlet pressure or by using a mechanical device to modulate the flow.

There are three inlet openings for the supply of material that is tangential to the primary flow of the nozzle. These three inlet openings have a flow valve with which the pressure and speed can be varied. Due to this different velocity, the material collides in the divergent section of the Laval nozzle due to the vortex motion. The kinetic energy of the compressed air coming from below should be greater than that of the PVDF material so that the PVDF particles are not easily transported out of the Laval nozzle. As a result, the PVDF particles remain in the turbulent flow inside the nozzle so that they come into contact with the active material from the convergent section and collide due to the swirling motion.

The main features of the invention are emphasised again below: The dry coating is carried out using a cold gas spraying technique. The binder inlet and injection of active material powder are located in different nozzle areas. The active material is fed to the process gas flow in the convergent section with a preferably heated compressed air flow. The process gas flow accelerates together with the active material to the speed of sound when it reaches the nozzle neck. The divergent section of the Laval nozzle can have various shapes. The preferred shape is the bell shape in combination with the square shape. The bell shape is the area of the mixing zone. The square shape is the divergent section at the nozzle outlet. PVDF (with or without carbon black) enters a divergent, bell-shaped zone, either in molten form at 200°C or in solution with a solvent such as propylene carbonate or acetonitrile or both from room temperature to max. 150°C. PVDF with carbon black is preferred. Compressed air is also injected into the nozzle in the opposite direction to the process gas flow. This creates turbulence which leads to a swirling motion. The active material and the PVDF particles collide with each other and the binder coating on active material surface is applied. The compressed air also atomises the molten PVDF so that fine PVDF particles are formed after solidification. The active material coated with a binder is sprayed onto the aluminium substrate at the critical speed. The substrate is already cut in the form of an electrode. No further calendering is required. Only the calendering of the skin is required for a better surface quality of the coating. Drying of the coating is not necessary. When molten PVDF is used, a dry coating forms on the substrate. When PVDF is used with solvents such as propylene carbonate or acetonitrile, or both, it acts as an electrolyte and can therefore remain in the semi-solid coating. Three different coating layers or adjacent segments with different densities are formed. The first coating layer is rich in binder. It serves as a primer layer. The middle layer is the main coating of active material and binder. It gives the cell its capacity. The other edge layer is also rich in binder and ensures good adhesion with the separator. The edge layers are less dense than the middle layer. The most important difference compared to the state of art, however, is the mixing of the liquid binder with the active material in the divergent section of the Laval nozzle.

The invention achieves the following advantageous effects: wet coating with the toxic solvent NMP is no longer necessary. The costs for drying are completely eliminated. The coating process is safer because no highly flammable NMP is used. The coating does not need to be heavily calendered to achieve the desired density. This avoids problems such as cracks, wrinkles and particle breakage. The density is achieved by the kinetic energy of the sprayed particles. Uniform mixing of the active ingredient with the binder occurs, mainly due to the swirling motion and collision of the active ingredient with fine binder particles. Atomisation technology can produce fine binder particles in nano form without the need for high mechanical dispersion shearing. PVDF and carbon black are mixed with the active material before blending. This gives the cathode coating better conductivity. This means that a high charge and discharge rate is possible. All mixing parameters can be controlled by controlling the pressure and flow rate of the active material, the binder and the compressed air inlet. A cathode coating with varying binder content in the layer thickness is also produced. This supports the adhesion of the cathode electrode to the separator, better conductivity of the cathode and less tortuosity of the lithium ion movement. According to the invention, the Laval nozzle not only has the task of spraying, but also carries out the mixing process. Mixing takes place immediately before spraying, so that there is no risk of sedimentation as with wet coating. The space required for this coating process is much smaller than for wet coating, as coating and mixing can be integrated into a single machine.

With the semi-solid coating, the electrolyte solvent is already contained in the coating, which contributes to faster wetting of the electrolyte. The solids content of the semi-solid coating is very high at around 90%. This means that it is easy to handle, just like solid coatings. The loading level (thickness of the coating can be twice as high as the wet coating, around 40 to 60mg/cm². This will lead to a high capacity of the cell. Adhesion and cohesion of the coating are higher due to the fine binder particles that attach to the substrate and the active material. As no PTFE is used, the binder also provides high mechanical strength to compensate for swelling during the charging process.

In the following, embodiments of the invention are described with reference to the attached figures.

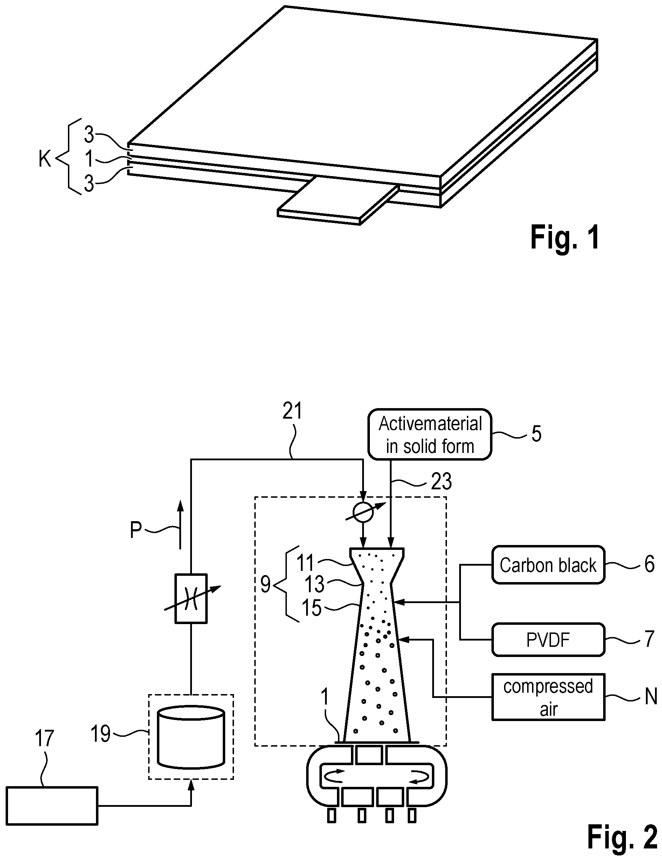

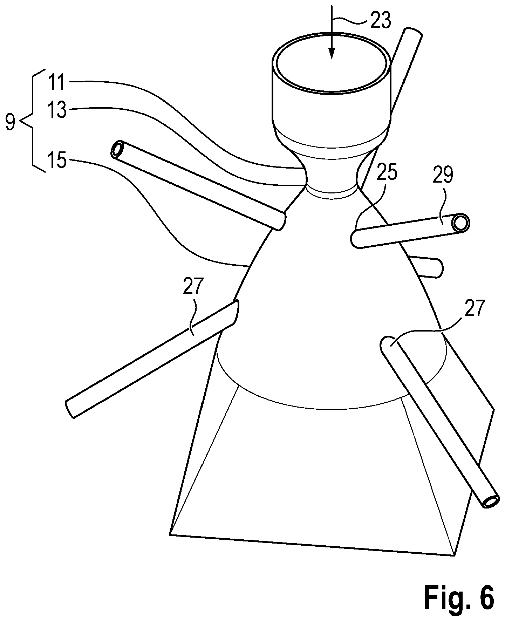

- Figures 1 to 11: show different views illustrating the structure and operation of a cold gas spraying system for carrying out the coating process according to the invention.

Figure 1 shows a finished cathode K, which is part of an electrode/separator stack of a battery cell that is not shown. The cathode K has a substrate film 1 that is coated on both sides with a active material layer 3. The active material layer 3 contains, among other things, active material particles 5 and a binder 7, in particular PVDF.

The cathode K is produced using a cold gas spraying system as shown in Figure 2. The cold gas spraying system has a Laval nozzle 9, which has a convergent section 11 at its nozzle inlet, which merges into a divergent section 15 on the outlet side at a nozzle neck 13. A heating unit 17, which heats a process gas P, is connected upstream of the Laval nozzle 9. The heated process gas P is fed into the convergent section 11 of the Laval nozzle 9 under high pressure via a gas line 21 by means of a compressor unit 19. In addition, active material particles 5 in powder form are fed to the convergent section 11 of the Laval nozzle 9 via a feed pipe 23.

The heated and highly pressurised process gas P is subjected to expansion to ambient pressure in the divergent section 15 of the Laval nozzle 9. As a result, the process gas flow P is accelerated to supersonic speed and simultaneously cooled to a process temperature below 100°C. As a result, the active material particles 5 carried by the process gas flow P are applied to the substrate film 1 at high speed in a main flow direction.

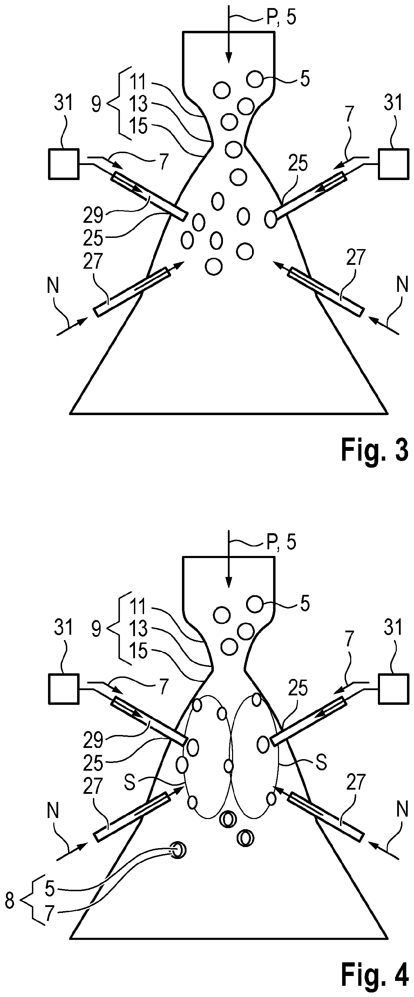

A key feature of the invention is that the divergent section 15 of the Laval nozzle 9 forms a mixing chamber into which, for example, three evenly circumferentially distributed binder inlets 25 open, as shown in Figures 3 to 6. The binder 7 is injected into the mixing chamber via the binder inlets 25. The binder injection direction is aligned with the main flow direction of the process gas flow P. Three evenly circumferentially distributed process gas inlets 27 are also arranged downstream of the binder inlets 25, via which a pressurised secondary process gas flow N is injected into the mixing chamber. The injection direction of the secondary process gas flow N is orientated in the opposite direction to the main flow direction. In addition, the binder inlets 25 are connected via feed lines 29 to a heating unit 31, in which the binder 7 is heated to its liquid phase, in particular to about 200°C. The binder 7 is injected in the liquid phase, in particular together with carbon black particles, into the divergent section 15 of the Laval nozzle 9. When injected into the divergent section 15 of the Laval nozzle 9, the molten binder 7 atomises into small droplets, which come into contact with the cooled process gas stream P. In this way, the binder 7 coats the active material particles 5, solidifying them.

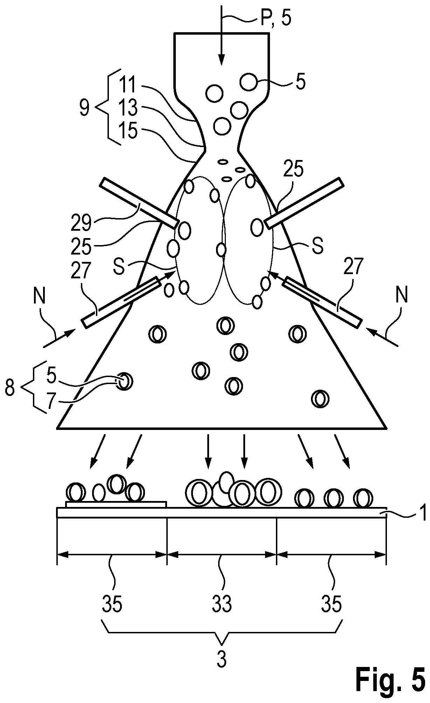

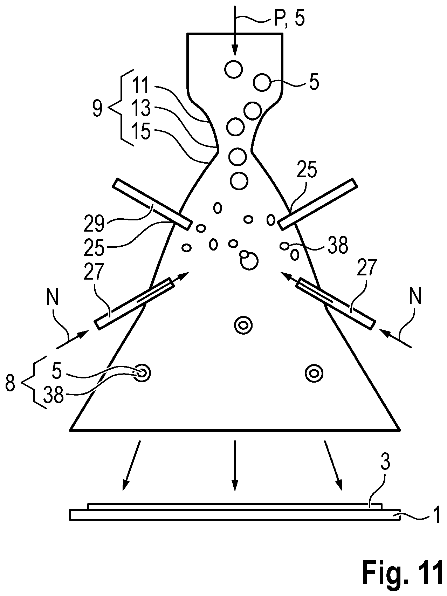

For the most uniform possible mixing of the binder 7 with the active material particles 5 in the divergent section 15 of the Laval nozzle 9, a turbulent flow pattern S (Figures 4 or 5), in particular a vortex flow, is generated in the mixing chamber with the aid of the secondary process gas flow N. This increases the residence time of the binder 7 and the active material particles 5 flowing through in the mixing chamber (i.e. in the divergent section 11 of the Laval nozzle 9). The turbulent flow pattern S can be adjusted by varying the flow pressure of the secondary process gas flow N. The active material/binder particles 8 formed in this way (Figures 5 or 11) are then applied to the substrate film 1 with the aid of the process gas flow P. The active material/binder particles 8 collides with the substrate film 1 with high kinetic energy and forms the dense, firmly holding active material layer 3.

For example, the active material powder is injected into the convergent section 11 of the Laval nozzle 9 using a carrier gas flow at a pressure of 10 to 15 bar. The liquid binder 7 can be injected into the divergent section 15 at a pressure of 3 to 5 bar and the secondary process gas flow (i.e. compressed air) at a pressure of 3 to 5 bar.

To further increase the turbulent flow pattern S in the mixing chamber of the Laval nozzle 9, the supply of the molten binder 7 or the secondary process gas flow N can be pulsed rather than continuous.

The particle velocity transverse to the main flow direction is not constant throughout in the area of the nozzle outlet. Rather, the particle velocity is reduced due to friction effects along the wall sections of the divergent section 15 of the Laval nozzle 9, while a comparatively high particle velocity prevails in a centre section away from the wall. Due to the different velocity distribution, the active material layer 3 as shown in Figure 5 is divided into a centre segment 33 and edge segments 35. A high-density layer structure is formed in the centre segment 33 of the active material layer 3, while the active material layer 3 is considerably thinner in the edge segments 35.

A second embodiment example is described below, which essentially corresponds to the first embodiment example. Reference is therefore made to the previous description. In contrast to the first embodiment example, in the second embodiment example the binder 7 is not injected in molten form into the mixing chamber of the Laval nozzle 9. Instead, a dispersion is injected into the divergent section 15 of the Laval nozzle 9. The dispersion contains at least binder particles as components, in particular carbon black particles together. The binder and carbon black particles are dispersed in a solvent. When injected into the mixing chamber, the dispersion formed in this way is atomised into droplets that adhere to the active material particles 5. Due to the solvent contained in the active material/binder particle mixture 8, the active material layer 3 applied to the substrate film 1 is formed as a semi-solid layer.

The preferred solvent is propylene carbonate or acetonitrile. These are also contained as components in the electrolyte of the battery cell. The solvent is therefore compatible with the electrolyte of the battery cell, so that the solvent does not have to be removed from the active material layer 3 by means of a drying process after the cold spraying process.

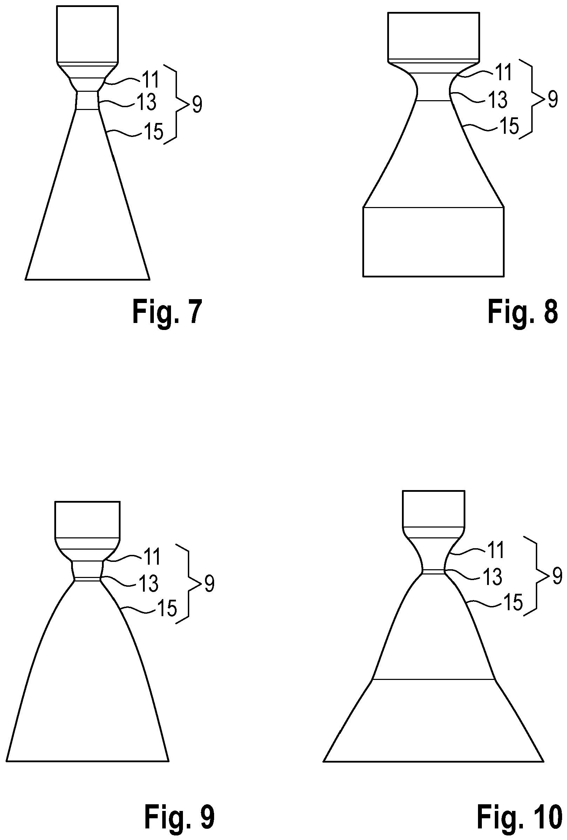

Figures 7 to 10 show different geometries of the Laval nozzle 9. According to Figure 7, the divergent section 15 of the Laval nozzle 9 expands completely into a cone shape. Alternatively, in Figure 8, the divergent section 15 of the Laval nozzle 9 initially expands into a conical shape and changes into a cylindrical shape at the nozzle outlet.

According to Figure 9, the divergent section 15 of the Laval nozzle 9 is completely bell-shaped. Alternatively, in Figure 10, the divergent section 15 is initially widened into a bell shape, which changes into a rectangular shape at the nozzle outlet.

A further embodiment example is shown in Figure 11. According to this example, solid PVDF particles 38 in nano size are injected into the divergent section of the Laval nozzle 9 instead of the liquid binder. Both PVDF and carbon black have a maximum size of 200 nm. They are evenly mixed and then injected into the divergent section 15 of the Laval nozzle 9 together with compressed air. In this case, no atomisation technique is required as the binder 7 is not liquid. Mixing is achieved by collision of the solid PVDF particles with the solid active material particles 5. The entire process takes place at room temperature. Dry mixing of PVDF and carbon black is necessary to ensure de-agglomeration. The Van der Waal's force between the particles ensures cohesion between the particles. The PVDF-coated active material is sprayed onto substrate 1 at a critical speed.

However, PVDF in nanoform with carbon black particles requires higher mechanical energy for shearing and deagglomeration. Otherwise there is a risk of carbon black agglomeration. This can lead to lower electrical conductivity. Mixing is less uniform and slower than when using liquid binder as suggested in this idea.

### List of reference symbols

- 1: substrate film
- 3: active material layer
- 5: active material particles
- 6: carbon black particles
- 7: binder
- 8: active material/binder particles
- 9: laval nozzle
- 11: convergent section
- 13: nozzle neck
- 15: divergent section
- 17: heating unit
- 19: compressor unit
- 21: gas pipeline
- 23: supply pipe
- 25: binder inlet
- 27: process gas inlet
- 29: supply line
- 31: heating device
- 33: middle segment
- 35: edge segment
- 38: binder particles in nano size
- K: cathode
- P: process gas flow
- N: secondary process gas flow

- S: turbulent flow pattern

## Claims

1. Method for manufacturing a cathode (K) for a battery cell, in which a substrate film (1) is coated on one or both sides with an active material layer (3) which is formed from a mixture of active material particles (5) and binder (7), in particular PVDF, wherein the coating of the substrate film (1) is carried out by cold gas spraying with a Laval nozzle (9), in which the active material particles (5) are applied in powder form to the substrate film (1) at high speed in a main flow direction with the aid of a process gas stream (P), **characterised in that**
the active material particles (5) in powder form are injected via a feed pipe (23) in a convergent section (11) of the Laval nozzle (9) into the process gas stream (P) guided through the Laval nozzle (9), and **in that**
a divergent section (15) of the Laval nozzle (9) forms a mixing chamber for uniform mixing of the active material particles (5) with the binder (7), in which the binder (7) is injected, especially in liquid state, into the process gas stream (P), and **in that**
the active material/binder particles (8) thus formed are subsequently applied to the substrate film (1) by means of the process gas stream (P).

2. Method according to claim 1, **characterised in that** the Laval nozzle (9) has at least one binder inlet (25) in the divergent section (15), via which the binder (7) is injected, preferably in liquid form, into the divergent section (15) of the Laval nozzle (9).

3. Method according to claim 1 or 2, **characterised in that** a turbulent flow pattern (S), in particular a vortex flow, is generated for uniform mixing in the divergent section (15) of the Laval nozzle (9), and **in that**, in particular for generating a turbulent flow pattern (S), the Laval nozzle (9) has at least one process gas inlet (27) in the divergent section (15), via which a secondary process gas flow (N) is injected into the divergent section (15) of the Laval nozzle (9), and **in that** the binder inlet (25) is positioned upstream of the process gas inlet (27), in particular when viewed in the main flow direction, and/or **in that** the injection direction of the secondary process gas flow (N) is orientated in the opposite direction to the main flow direction, and/or **in that** the binder injection direction is orientated in the main flow direction.

4. Method according to claim 1, 2 or 3, **characterised in that** a heating unit (17) and a compressor unit (19) are connected upstream of the Laval nozzle (9) in terms of process technology, and **in that** the heating unit (17) heats the process gas (P) and feeds the heated process gas (P) under high pressure to the convergent section (11) of the Laval nozzle (9) by means of the compressor unit (19), and **in that** the subsequent expansion of the heated and highly pressurised process gas stream (P) in the divergent section (15) of the Laval nozzle (9) to ambient pressure results **in that** the process gas stream (P) is accelerated to supersonic speed and simultaneously cooled, in particular to temperatures below 100°C, whereby the active material/binder particles (8) produced in the divergent section (15) of the Laval nozzle (9) impact with high kinetic energy onto the substrate film (1) and form a dense, firmly adhering active material layer (3) there.

5. Method according to one of the preceding claims, **characterised in that** the binder inlet (25) is connected via a feed line (29) to a heating unit (31), in which the binder (7) is heated to its liquid phase, in particular to about 200°C, and is injected in liquid phase via the binder inlet (25) into the divergent section (15) of the Laval nozzle (9), preferably together with carbon black particles.

6. Method according to claim 5, **characterised in that** the molten binder (7) is atomised into droplets when injected into the divergent section (15) of the Laval nozzle (9) and comes into contact with the cooled process gas stream, whereby the binder droplets, especially produced by the atomisation process, envelop the active material particles (5) with solidification.

7. Method according to one of claims 1 to 5, **characterised in that** the binder (7) is injected as a component of a dispersion into the divergent section (15) of the Laval nozzle (9), and **in that** binder particles, in particular together with carbon black particles, are dissolved in a solvent in the dispersion, and **in that**, in particular, the dispersion is atomised upon injection into the mixing chamber to form droplets which adhere to the active material particles (5), and **in that** the active material layer (3) applied to the substrate film (1) is formed as a semi-solid layer, in particular due to the solvent (37).

8. Method according to claim 7, **characterised in that** the solvent is propylene carbonate or acetonitrile, which are also contained as components in the electrolyte of the battery cell, so that the solvent (37) contained in the active material layer (3) does not have to be removed from the active material layer (3) by an additional drying process, in particular due to the material compatibility of the solvent with the electrolyte.

9. Method according to one of claims 2 to 8, **characterised in that**, in order to further increase the turbulent flow pattern (S) in the mixing chamber (15), the supply of the binder (7) or the secondary process gas flow (N) is not continuous but pulsating.

10. Method according to one of the preceding claims, **characterised in that** the divergent section (15) of the Laval nozzle (9) expands into a conical shape, or **in that** the divergent section (15) of the Laval nozzle (9) initially expands into a conical shape and changes into a cylindrical shape at the nozzle outlet, or that the divergent section (15) expands completely into a bell shape, or that the divergent section (15) initially expands into a bell shape and changes into a rectangular shape at the nozzle outlet, which especially can result in a multilevel coating with different density and active material.
